# EUROPÄISCHE PATENTSCHRIFT

(11) **EP 3 444 107 B1**
(45) Veröffentlichungstag und Bekanntmachung des Hinweises auf die Patenterteilung: **02.10.2024**
(21) Anmeldenummer: 18189371.0
(22) Anmeldetag: 16.08.2018
(51) Int. Cl.: B29D 99/00, B29C 70/68, B32B 3/12, B33Y 80/00

(54) **VERFAHREN ZUR HERSTELLUNG EINES SANDWICHBAUTEILS, KERN FÜR EIN SANDWICHBAUTEIL SOWIE SANDWICHBAUTEIL**
METHOD FOR MANUFACTURING A SANDWICH COMPONENT, CORE FOR A SANDWICH COMPONENT AND SANDWICH COMPONENT
PROCÉDÉ DE FABRICATION D'UN COMPOSANT SANDWICH, NOYAU POUR UN COMPOSANT SANDWICH AINSI QU'UN COMPOSANT SANDWICH

(30) Priorität: 17.08.2017 DE 102017214340
(43) Veröffentlichungstag der Anmeldung: 20.02.2019
(73) Patentinhaber: Airbus Operations GmbH, 21129 Hamburg (DE)
(72) Erfinder: DEBRIL, Gilles, 22869 Schenefeld (DE); ROBRECHT, Volker, 21129 Hamburg (DE)
(74) Vertreter: Isarpatent

(56) Entgegenhaltungen:
- EP-A1- 3 034 208
- EP-A1- 3 045 300
- DE-A1- 102012 020 671
- DE-A1- 102015 105 603
- DE-A1- 102015 206 713
- US-A1- 2008 145 597

## Beschreibung

Die vorliegende Erfindung betrifft ein Verfahren zur Herstellung eines Sandwichbauteils, einen Kern für ein Sandwichbauteil sowie ein Sandwichbauteil.

Strukturbauteile mit einem sogenannten Sandwichaufbau weisen üblicherweise zumindest eine äußere, sich flächig erstreckende Deckschicht und eine sich an diese anschließende Kernschicht auf. Die Kernschicht ist zumeist als Wabenstruktur aus einem Material mit geringer Dichte ausgebildet. Die Deckschicht ist üblicherweise als dünne, mechanisch widerstandsfähige flächige Schicht ausgebildet. Auf diese Weise wird bei geringem Bauteilgewicht eine relativ hohe mechanische Festigkeit oder Steifigkeit erzielt, weshalb Strukturbauteile in Sandwichbauweise in vielfältiger Weise verwendet werden, insbesondere auch im Luft- und Raumfahrzeugbau.

Die WO 2015/105859 A1 beschreibt eine Kernschicht für ein Sandwichbauteil, die aus einer Vielzahl von offenen oder geschlossenen Zellen mittels eines 3-D-Druckverfahrens hergestellt wird. Üblicherweise werden die Deckschichten des Sandwichbauteils sowie der Kern jeweils separat Hergestellt und anschließend miteinander verbunden, beispielsweise miteinander verklebt.

Die DE102012020671A1 beschreibt ein Verfahren zur Herstellung eines Bauelementes, welches durch ein generatives Schichtbauverfahren hergestellt ist. Dabei ist das Bauelement innen entweder massiv, wabenförmig oder weist zumindest einen Hohlraum auf. Darüber wird eine Deckschicht aufgetragen.

Die EP3034208A1 offenbart ein Verfahren zur Herstellung von versteiften Strukturen wie anisotrope Platten, die mechanische und thermische Funktionen integrieren, sowie den Kern und die erhaltenen Deckschichten.

Die EP3045300A1 zeigt ein Bauteil mit einer Vielzahl von Elementareinheiten, die in einem regelmäßigen Muster angeordnet sind, um eine mesoskopische geometrische Struktur unter Verwendung einer AM- oder 3D-Drucktechnik zu bilden,
Die US2008/0145597A1 offenbart ein Honeycomb Panel mit Zellen, die zumindest teilweise thermoplastisches Material aufweisen.

Die DE102015105603A1 beschreibt ein Sandwichpaneel für ein Luftfahrzeug, mit zwei Deckschichten und einer dazwischen angeordneten Kernschicht. Die Kernschicht weist Stifte auf, die sich von der einen durch die Kernschicht zur anderen Deckschicht erstrecken.

Es ist eine der Aufgaben der vorliegenden Erfindung ein verbessertes Verfahren, insbesondere ein hinsichtlich der Prozessgeschwindigkeit verbessertes Verfahren zur Herstellung eines Sandwichbauteils bereitzustellen. Eine weitere Aufgabe der vorliegenden Erfindung liegt darin, einen verbesserten Kern für ein Sandwichbauteil bereitzustellen, insbesondere einen Kern, der die Herstellung des Sandwichbauteils vereinfacht und/oder der verbesserte mechanische Eigenschaften aufweist.

Diese Aufgaben werden jeweils durch die Gegenstände der unabhängigen Ansprüche gelöst.

Vorteilhafte Ausgestaltungen und Weiterbildungen ergeben sich aus den auf die unabhängigen Ansprüche rückbezogenen Unteransprüchen in Verbindung mit der Beschreibung.

Nach einem ersten Aspekt der Erfindung ist ein Verfahren zur Herstellung eines Sandwichbauteils vorgesehen. Erfindungsgemäß erfolgt ein Ausbilden einer ersten Deckschicht auf einer Formoberfläche eines Formwerkzeugs. In diesem Schritt wird eine geschlossene sich flächig erstreckende Schicht ausgebildet. Die kann beispielsweise durch Ablegen von Faserbändern auf die Formoberfläche realisiert werden. Hierbei werden sogenannte Prepreg-Bänder, also mit einem Harz- oder Matrixmaterial imprägnierte Bänder aus einem Faserwerkstoff, beispielsweise mithilfe eines Ablegekopfs, entlang einer Ablagerichtung auf einer Werkzeugoberfläche abgelegt. Die kann das Ausbilden mehrerer übereinanderliegender Lagen aus Faserbändern umfassen, wobei die Faserbänder innerhalb einer Schicht bevorzugt die gleiche Faserorientierung aufweisen und die Faserbänder einer benachbart gelegenen Schicht bevorzugt eine von der Faserorientierung der darunterliegenden Schicht abweichende Faserorientierung aufweisen. Die Faserbänder werden optional in einem Zustand abgelegt, in welchem das Matrixmaterial zumindest an der Oberfläche in einem viskosen Aggregatszustand vorliegt, oder das Matrixmaterial wird unmittelbar nach dem Ablegen mittels Wärmezufuhr, beispielsweise mithilfe einer an dem Ablegekopf vorgesehen Heizeinrichtung, in einen viskosen Zustand überführt. Dadurch verschmelzen die einzelnen Faserbänder sowie gegebenenfalls die einzelnen Lagen von Faserbändern. Es wird also eine monolithische, geschlossene, sich flächig erstreckende erste Deckschicht gebildet. Eine Außenoberfläche der ersten Deckschicht liegt dabei an der Formoberfläche des Formwerkzeugs an. Eine Innenoberfläche der ersten Deckschicht ist entgegengesetzt zu der Außenoberfläche orientiert.

Alternativ hierzu kann die erste Deckschicht auch durch Anlegen und dabei gegebenenfalls Umformen eines sich flächig erstreckenden Faserhalbzeugs an die Formoberfläche des Formwerkzeugs ausgebildet werden. Das Faserhalbzeug kann insbesondere als platten- oder mattenförmiges flächiges Halbzeug ausgebildet sein, welches mehrere Lagen von in Matrixmaterial eingebetteten Faserlagen aufweist. Dieses Halbzeug wird in einem Zustand, in welchem das Matrixmaterial zumindest teilweise in einem viskosen Aggregatszustand vorliegt, an die Formoberfläche des Formwerkzeugs angedrückt und damit entsprechend geformt. Optional kann vor der Durchführung des nächsten Schritts des Verfahrens ein Härten oder Erstarren des Matrixmaterials erfolgen.

In einem weiteren Schritt wird ein Kern des Sandwichbauteils durch Aufbauen einer Zellstruktur mit einer Vielzahl von Zellen in einer Dickenrichtung auf der ersten Deckschicht mittels eines additiven Herstellungsverfahrens erzeugt. Es wird also direkt auf der Innenoberfläche der ersten Deckschicht ein 3-D-Druckverfahren durchgeführt, bei dem der Kern hergestellt wird. Auf diese Weise wird der Kern bereits bei dessen Herstellung mit der ersten Deckschicht verbunden. Dies beschleunigt und vereinfacht die Herstellung des Sandwichbauteils, da auf diese Weise zwei Verfahrensschritte zusammengefasst werden. Ferner bietet 3D-Drucken außergewöhnliche Designfreiheit und erlaubt es unter anderem individuell angepasste Zellstrukturen mit überschaubarem Aufwand herzustellen, welche mit herkömmlichen Methoden nicht oder nur unter erheblichem Aufwand herstellbar wären. Als additives Herstellungsverfahren wird zur Erzeugung des Kerns ein FDM-3-D-Druck-Verfahren durchgeführt. FDM steht hierbei als Abkürzung für den Englischen Ausdruck "Fused Deposition Modeling". Bei diesem Verfahren werden die die Zellen bildenden Wandungen dadurch erzeugt, dass ein draht- oder bandförmiges Kunststoffmaterial durch Erwärmen verflüssigt und mittels einer Düse durch Extrudieren auf die Innenoberfläche der ersten Deckschicht aufgebracht wird. Anschließen Härtet das Kunststoffmaterial durch Abkühlung an der gewünschten Position aus. Der Aufbau der Zellen erfolgt üblich indem wiederholt, jeweils eine Arbeitsebene abgefahren und dann die Arbeitsebene stapelnd nach oben verschoben wird, sodass die Zellstruktur schichtweise entsteht.

Die Zellstruktur wird von der Innenoberfläche der unteren Deckschicht aus in einer Dickenrichtung aufgebaut. Es wird eine Vielzahl einzelnen Zellen ausgebildet, die insbesondere mit mehreren Zellwänden als geschlossene Zellen ausgebildet sein können. Die Zellen können beispielsweise als konvexe Polyeder ausgebildet werden. Ein Polyeder heißt konvex, wenn für je zwei Punkte des Polyeders die Verbindungsstrecke zwischen diesen Punkten vollständig im Inneren des Polyeders liegt. Es können beispielsweise Zellen in Form eines Quaders, eines Hexaeders, eines Oktaeders, eines Oktaederstumpfs, eines Tetraeders, eines Doppeltetraeders, eines polygonalen Prismas, eines Dodekaeders, eines Ikosaeders, eines Ikosidodekaeders oder dergleichen vorgesehen sein. Die Dickenrichtung verläuft quer zu der Innenoberfläche der unteren Deckschicht. Insbesondere wird eine Zellstruktur mit einer über die Erstreckung der Innenoberfläche konstanten oder sich ändernden Dicke ausgebildet. Die in Bezug auf die Dickenrichtung entgegengesetzt und zu äußerst gelegenen Zellen der Zellstruktur bilden im Abstand der Dicke Zellstruktur eine Ablageoberfläche aus.

In einem weiteren Schritt wird eine zweite Deckschicht des Sandwichbauteils auf der entgegengesetzt zu der ersten Deckschicht gelegenen Ablageoberfläche des Kerns auf die Ablageoberfläche gebildet. Das Ablegen der zweiten Deckschicht auf die Ablageoberfläche des Kerns kann insbesondere mit der gleichen Vorrichtung und in der gleichen Weise erfolgen, wie dies für die erste Deckschicht beschrieben wurde, insbesondere durch Ablegen von Faserbändern oder durch Anlegen sowie gegebenenfalls Umformen eines sich flächig erstreckenden Faserhalbzeugs an die Ablageoberfläche. Durch das Ausbilden der zweiten Deckschicht direkt auf dem Kern wird diese bereits während des Ablegens mit dem Kern verbunden. Somit wird ein weiterer Prozessschritt eingespart und das Verfahren weiter beschleunigt. Ferner passt sich die zweite Deckschicht beim Ablegen auf die Ablageoberfläche des Kerns dem Oberflächenverlauf der Ablageoberfläche an. Auf diese Weise wird ein enger, flächiger Kontakt zwischen dem Kern und der zweiten Deckschicht erreicht, was die Gefahr der Delamination zwischen Deckschicht und Kern verringert.

Durch das erfindungsgemäße Verfahren kann somit in einer einzigen Werkzeugvorrichtung, insbesondere an einer einzigen Arbeitsstation, und auf besonders schnelle Weise ein Sandwichbauteil hergestellt werden. Die erste Deckschicht kann auf automatisierte Weise durch Ablegen von Faserbändern oder durch Formen, insbesondere Warmformen auf einer Werkzeugoberfläche erzeugt werden. Hierzu kann jeweils eine automatisiert arbeitende Ablegevorrichtung, wie eine Ablegekopf oder ein Endeffektor verwendet werden. Durch die Herstellung des Kerns direkt auf der ersten Deckschicht mittels eines additiven Herstellungsverfahrens wird hinsichtlich des Kerns eine große Gestaltungsfreiheit ermöglicht, wobei auf komplexe Werkzeuge verzichtet werden kann. Da 3-D-Druck-Vorrichtungen datenmodellbasiert arbeiten, kann auf manuelle Arbeitsschritte, wie ein bei üblichen Verfahren oftmals notwendiges manuelles Ausrichten des Kerns oder ähnliches, verzichtet werden. Ferner werden durch das direkte Herstellen des Kerns auf der ersten Deckschicht Ausrichtungsfehler vermieden und damit die Qualität des Sandwichbauteils verbessert. Auch die zweite Deckschicht kann in automatisierter, ähnlich wie die erste Deckschicht, erzeugt werden. Dadurch, dass dies direkt auf dem Kern realisiert wird, wird auch hier eine große Präzision bei der Positionierung der Deckschicht erreicht. Mit dem erfindungsgemäßen Verfahren ist das Sandwichbauteil somit in einer Art Integralverfahren oder integrierten Verfahren herstellbar, bei dem sämtliche Arbeitsschritte automatisiert und an einer einzigen Arbeitsstation durchführbar sind. Dadurch werden Transportwege für die einzelnen Komponenten und Wartezeiten zwischen den Prozessschritten verkürzt oder vermieden und dadurch die Herstellungszeit insgesamt verkürzt.

Gemäß einer Ausführungsform des Verfahrens ist vorgesehen, dass die Faserbänder zur Ausbildung der ersten Deckschicht und/oder der zweiten Deckschicht oder das Faserhalbzeug zur Ausbildung der ersten Deckschicht und/oder der zweiten Deckschicht jeweils ein thermoplastisches Matrixmaterial, beispielsweise Polyphenylensulfid, kurz PPS, Polyetheretherketon, kurz PEEK, oder ein ähnliches thermoplastisches Material aufweisen. Insbesondere werden zur Herstellung der Deckschichten Faserbänder oder Faserhalbzeuge auf Thermoplastbasis verwendet. Dies bietet insbesondere den Vorteil, dass sich das Matrixmaterial durch Wärmezufuhr auf einfache Weise anschmelzen lässt und keine zusätzliche Wärmebehandlung zum Aushärten des Matrixmaterials notwendig ist. Insbesondere kann auf diese Weise auf eine Behandlung der Deckschichten in einem Autoklaven verzichtet werden, wodurch das Verfahren weiter beschleunigt wird.

Gemäß einer Ausführungsform wird die Zellstruktur des Kerns aus einem thermoplastischen Material aufgebaut. Hierbei kommen insbesondere thermoplastische Kunststoffmaterialien, wie beispielsweise Polykarbonat, kurz PC, Polyetherimid, kurz PEI, oder ähnliche Thermoplaste. Besonders vorteilhaft können das Matrixmaterial der ersten und der zweiten Deckschicht sowie das Material des Kerns jeweils aus einem thermoplastischen Kunststoffmaterial aufgebaut sein. Auf diese Weise wird eine besonders zuverlässige und mechanisch Widerstandsfähige Verbindung zwischen Kern und Deckschichten erzielt.

Gemäß einer Ausführungsform des Verfahrens ist vorgesehen, dass die Zellstruktur des Kerns mit einem in Bezug auf die Dickenrichtung entgegengesetzt zu der ersten Deckschicht gelegenen Ablagerandbereich ausgebildet wird, welcher eine größere volumenbezogene Zelldichte aufweist, als ein sich in der Dickenrichtung anschließender Innenbereich der Zellstruktur. Es wird also ein Querschnittsbereich am Rand der Zellstruktur erzeugt, welcher die Ablageoberfläche ausbildet. In diesem Querschnittsbereich sind also innerhalb eines vorgegebenen Volumens mehr Zellen vorhanden, als innerhalb desselben Volumens in einem Innenbereich des Querschnitts, der sich in Bezug auf die Dickenrichtung anschließt. Auf diese Weise werden gegebenenfalls vorhandene, durch Zellwände begrenzte Öffnungen der Ablageoberfläche verkleinert. Dadurch werden die Faserbänder beim Ablegen auf die Ablageoberfläche des Kerns besser gestützt, sodass Dellen zuverlässig vermieden werden. Ferner wird die Kontaktoberfläche zwischen Kern und zweiter Deckschicht vergrößert, was die Adhäsion zwischen diesen Schichten verbessert. Ein weiterer Vorteil dieser Gestaltung liegt darin, dass die mechanische Steifigkeit, insbesondere der Biegewiderstand des Kerns vergrößert wird.

Gemäß einer weiteren Ausführungsform können die in Bezug auf die Dickenrichtung entgegengesetzt zu der ersten Deckschicht gelegenen und die Ablageoberfläche ausbildenden Zellen derart ausgebildet werden, dass eine Längserstreckung der Zellen entlang einer Ablagerichtung verläuft, in welcher die Faserbänder mit deren Faserlängsrichtung abgelegt werden. Gemäß dieser Ausführungsform werden die in Bezug auf die Dickenrichtung äußersten Zellen derart ausgebildet, dass die Fasern des Faserbands, wenn diese auf der Ablageoberfläche des Kerns in einer bestimmten Richtung abgelegt werden, sich entlang der Längserstreckung von durch Zellwände umgrenzte Öffnungen der Ablageoberfläche erstrecken. Wenn in der Ablageoberfläche durch Zellwände der Zellen beispielsweise rechteckförmige Öffnungen ausgebildet sind, werden die Zellwände so ausgerichtet, dass beim Ablegen der Faserbänder die Fasern entlang der Längsseite der rechteckförmigen Öffnung verlaufen. Diese Ausrichtung bietet den Vorteil, dass kaum sich zwischen den Fasern befindliches Matrixmaterial in die Öffnung hinein durchhängt, wodurch Dellen in der Deckschicht zuverlässig vermieden werden.

Gemäß einer weiteren Ausführungsform werden die in Bezug auf die Dickenrichtung entgegengesetzt zu der ersten Deckschicht gelegenen und die Ablageoberfläche ausbildenden Zellen mit einem Füllmaterial gefüllt. Auf diese Weise werden von durch Zellwände umgrenzte Öffnungen der Ablageoberfläche vollständig geschlossen. Dadurch wird eine besonders große Anlageoberfläche für die zweite Deckschicht bereitgestellt, was eine äußerst zuverlässige Adhäsion zwischen Deckschicht und Kern bewirkt. Ferner werden Dellen in der Deckschicht vermieden. Außerdem kann auf diese Weise auch die Gefahr verringert werden, dass Wasser oder allgemein Flüssigkeiten ins Innere der Kernschicht eintritt.

Das Füllen der Zellen zur Ausbildung der Ablageoberfläche kann insbesondere mittels des additiven Herstellungsverfahrens beim Aufbau der Zellstruktur erfolgen. Hierbei werden also die in Bezug auf die Dickenrichtung äußersten Zellen während deren Aufbau direkt als gefüllte, massive Zellen ausgebildet. Alternativ hierzu kann auch Nachträglich ein Füllen der Zellen mit einem Füllmaterial, beispielsweise dem Material, aus dem die Zellen selbst gebildet sind, oder einem Schaummaterial, erfolgen.

Gemäß einer weiteren Ausführungsform kann vorgesehen sein, dass die Zellstruktur des Kerns mit einem sich in Bezug auf die Dickenrichtung direkt an die erste Deckschicht anschließenden Kontaktrandbereich ausgebildet wird, welcher eine größere volumenbezogene Zelldichte aufweist, als ein sich in der Dickenrichtung anschließender Innenbereich der Zellstruktur. Auch kann in diesem Kontaktrandbereich vorgesehen sein, dass die sich in direktem Kontakt mit der ersten Deckschicht befindlichen Zellen der Zellstruktur mit einem Füllmaterial gefüllt werden. Diese optionalen Gestaltungen verbessern die Adhäsion zwischen erster Deckschicht und Kern sowie die mechanische Widerstandsfähigkeit des Kerns. Weiterhin wird im Falle des Ausfüllens der Zellen zuverlässig das Eindringen von Flüssigkeit ins Innere der Zellstruktur vermieden.

Nach einer weiteren Ausführungsform des Verfahrens kann die Zellstruktur des Kerns zur Erhöhung der mechanischen Festigkeit des Kerns derart aufgebaut werden, dass Bereiche ausgebildet werden, welche eine größere volumenbezogene Zelldichte aufweisen, als benachbart gelegene Bereiche. Demnach können Querschnittsbereiche, in denen eine hohe mechanische Belastung des Kerns zu erwarten ist, mit kleineren Zellen ausgebildet werden, als andere Querschnittsbereiche, in denen eine geringe mechanische Belastung des Kerns zu erwarten ist. Auf diese Weise kann ein einstückiger Kern mit geringem Aufwand, geringem Gewicht und hoher mechanischer Festigkeit vorteilhaft erzeugt werden. Querschnittsbereiche, in denen eine hohe mechanische Belastung des Kerns zu erwarten ist, können insbesondere Bereiche sein, welche zur Anbringung von Verbindungs- oder Befestigungsvorrichtungen wie Schrauben, Nieten, Bolzen oder dergleichen vorgesehen sind. Auch Bereiche, in die lokale Inserts eingebettet werden sollen, können mechanisch hochbelastete Bereiche darstellen.

Alternativ hierzu kann die Zellstruktur des Kerns zur Erhöhung der mechanischen Festigkeit des Kerns derart aufgebaut werden, dass Bereiche ausgebildet werden, in welchen die Zellen mit Zellwände aus einem Material gebildet werden, welches eine größere mechanische Festigkeit aufweist, als die Zellwände der Zellen in benachbart gelegenen Bereichen. Hierbei werden in Querschnittsbereichen, in denen eine hohe mechanische Belastung des Kerns zu erwarten ist, die Zellwände aus einem widerstandsfähigeren oder stabileren Material ausgebildet, als andere Querschnittsbereiche, in denen eine geringe mechanische Belastung des Kerns zu erwarten ist. Dies bietet den Vorteil, dass die einzelnen Zellen jeweils mit identischer Geometrie aufgebaut werden können, was den Aufwand für die Modellierung des Kerns und die Steuerung der 3-D-Druckvorrichtung zum Aufbau des Kerns vereinfacht.

Gemäß einer weiteren Alternative kann die Zellstruktur des Kerns zur Erhöhung der mechanischen Festigkeit des Kerns derart aufgebaut werden, dass Bereiche ausgebildet werden, in welchen die Zellwände der Zellen eine größere Wandstärke aufweisen, als die Zellwände der Zellen in benachbart gelegenen Bereichen.

Gemäß einer weiteren Alternative kann die Zellstruktur des Kerns zur Erhöhung der mechanischen Festigkeit des Kerns derart aufgebaut werden, dass Bereiche ausgebildet werden, in welchen die Zellen mit einem Füllmaterial gefüllt werden.

Nach einer weiteren Ausführungsform des Verfahrens wird während des Ausbildens der ersten Deckschicht und/oder während der Erzeugung des Kerns und/oder während des Ausbildens der zweiten Deckschicht eine Oberflächeninspektion zur Erkennung von Oberflächendefekten durchgeführt wird. Es kann also bereits während des Ablegens der Deckschichten eine Untersuchung der Qualität der erzeugten jeweiligen Lage aus Faserbändern erfolgen. Dies kann beispielsweise mittels eines optischen oder akustischen Verfahrens realisiert werden. Insbesondere kann eine Kamera oder ein Ultraschallsensor an einem Ablegekopf, welcher die Faserbänder ablegt, angebracht sein, um Oberflächendefekte oder Fremdkörper zu erkennen. Auch kann während des Erzeugens des Kerns die Oberfläche der jeweils aufgetragenen Materialschicht des Kerns optisch oder akustisch nach Defekten untersucht werden. Die Durchführung der jeweiligen Inspektion gleichzeitig mit der Herstellung des jeweiligen Bestandteils des Sandwichbauteils verkürzt den Herstellungsprozess weiter.

Alternativ oder zusätzlich kann nach der Ausbildung der zweiten Deckschicht vorgesehen sein, dass das Sandwichbauteil insgesamt zerstörungsfrei auf Bauteildefekte, wie z.B. Delamination der Deckschichten, Fehlstellen oder Einschlüsse von Fremdkörpern in den Deckschichten sowie in dem Kern, untersucht wird. Hierzu kann das Sandwichbauteil z.B. mittels Röntgenstrahlen durchleuchtet werden.

Gemäß einem weiteren Aspekt der Erfindung ist ein Sandwichbauteil vorgesehen, welches auf die oben beschriebene Weise hergestellt ist und dementsprechend die oben beschriebenen Merkmale des Kerns aufweist.

Die Zellen können insbesondere mit mehreren Zellwänden als geschlossene Zellen ausgebildet sein.

Insbesondere kann vorgesehen sein, dass die Zellstruktur des Kerns in Bezug auf die Dickenrichtung einen Ablagerandbereich aufweist, welcher eine größere volumenbezogene Zelldichte aufweist, als ein sich in der Dickenrichtung anschließender Innenbereich der Zellstruktur.

Weiterhin kann vorgesehen sein, dass die in Bezug auf die Dickenrichtung eine Ablageoberfläche des Kerns bildenden Zellen mit einem Füllmaterial gefüllt sind.

Nach einer weiteren Ausführungsform kann die Zellstruktur zur Erhöhung der mechanischen Festigkeit des Kerns Bereiche aufweisen,
- welche eine größere volumenbezogene Zelldichte aufweisen, als benachbart gelegene Bereiche,
- in welchen die Zellen Zellwände aus einem Material aufweisen, welches eine größere mechanische Festigkeit aufweist, als die Zellwände der Zellen in benachbart gelegenen Bereichen, oder
- in welchen die Zellwände der Zellen eine größere Wandstärke aufweisen, als die Zellwände der Zellen in benachbart gelegenen Bereichen.

Gemäß einer weiteren Ausführungsform des Kerns weist die Zellstruktur einen Umfangsrandbereich auf, welcher sich von einem Umfangsrand der Zellstruktur aus quer zu der Dickenrichtung in einer Querrichtung erstreckt, wobei der Umfangsrandbereich eine größere volumenbezogene Zelldichte aufweist, als ein sich in der Querrichtung anschließender Innenbereich der Zellstruktur. Allgemein weist der Kern eine von einem Umfangsrand umgrenzte flächige Erstreckung auf. Gemäß der vorliegenden Ausführungsform ist ein sich von dem Umfangsrand aus erstreckender Querschnittsbereich des Kerns vorgesehen, der sich über eine diskrete Strecke ins Innere des Kerns erstreckt und als Umfangsrandbereich bezeichnet wird. In diesem Umfangsrandbereich weisen die den Querschnitt des Kerns ausbildenden Zellen der Zellstruktur ein kleineres Volumen auf, als in einem sich an den Umfangsrandbereich anschließenden Querschnittsbereich. Auf diese Weise ist im Umfangsrandbereich eine größere Materialmengeje Zelle vorhanden, sodass einerseits die mechanische Festigkeit des Kerns verbessert wird und andererseits vorteilhaft die Anbringung von Befestigungsvorrichtungen wie Schrauben, Nieten, Bolzen oder dergleichen in dem Umfangsrandbereich erleichtert wird. Hierfür kann alternativ auch vorgesehen sein, dass die Zellen des Umfangsrandbereichs mit einem Füllmaterial gefüllt sind.

Gemäß einer weiteren Ausführungsform des Kerns kann auch vorgesehen sein, dass in dem Umfangsrandbereich ein Anschlussabschnitt zum formschlüssigen Befestigen des Kerns ausgebildet ist. Beispielsweise kann der Anschlussabschnitt durch einen von dem Umfangsrand abstehenden bzw. von diesem vorspringenden Stift oder eine sich von dem Umfangsrand aus in den Querschnitt des Kerns hinein erstreckende Ausnehmung gebildet sein. Auf diese Weise kann der Kern besonders einfach formschlüssig an weitere Kerne gekoppelt werden, was die Montage von Sandwichbauteilen, welche den Kern aufweisen, erleichtert.

Die im Zusammenhang mit dem erfindungsgemäßen Verfahren beschriebenen Merkmale und Vorteile des Kerns gelten für den nach diesem Aspekt der Erfindung beschriebenen Kern in analoger Weise.

Hierin wird unter einem "Faserwerkstoff", einem "Fasermaterial" allgemein ein Werkstoff verstanden, der aus einer Vielzahl von insbesondere fadenförmigen oder fadenstückförmigen Verstärkungsfasern, wie beispielsweise Kohle-, Glas-, Keramik-, Aramid-, Bor-, Mineral-, Natur- oder Kunststofffasern oder Mischungen aus diesen gebildet ist.

Unter "Faserbändern" oder "Prepreg-Bändern" oder einem "Faserhalbzeug" wird hierin ein Faserwerkstoff verstanden, der mit einem Harz- oder Matrixmaterial wie z.B. einem duroplastischen, thermoplastischen, elastomeren Harz oder allgemein ein Kunststoffharz oder dergleichen imprägniert ist bzw. die Fasern des Faserwerkstoffs sind in das Harz- oder Matrixmaterial eingebettet. Die Faser- oder Prepreg-Bänder sind hierbei zu sich in einer Längsrichtung erstreckenden Bändern konfektioniert. Das Faserhalbzeug kann insbesondere zu einer sich flächig erstreckenden und geschlossenen Matte oder Platte ausgebildet sein, welche mehrere übereinander gestapelte Lagen aus einem Fasermaterial aufweist, wobei sich die Fasern in benachbarten Lagen bevorzugt in verschieden Richtungen erstrecken.

3D-Druckverfahren im Sinne der vorliegenden Anmeldung umfassen alle generativen bzw. additiven Fertigungsverfahren, bei welchen auf der Basis von geometrischen Modellen Objekte vordefinierter Form aus formlosen Materialien wie Flüssigkeiten und Pulvern oder formneutralen Halbzeugen wie etwa band- oder drahtförmigem Material mittels chemischer und/oder physikalischer Prozesse in einem speziellen generativen Fertigungssystem hergestellt werden. 3D-Druckverfahren im Sinne der vorliegenden Anmeldung verwenden dabei additive Prozesse, bei denen das Ausgangsmaterial schichtweise in vorgegebenen Formen sequentiell aufgebaut wird.

Hierin wird unter "einstückig", "einteilig", "integral" oder "in einem Stück" ausgebildeten Komponenten allgemein verstanden, dass diese Komponenten als ein einziges, eine Materialeinheit bildendes Teil vorliegen und insbesondere als ein solches hergestellt sind, wobei die eine von der anderen Komponente nicht ohne Aufhebung des Materialzusammenhalts von der anderen lösbar ist.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner gleich 45 Grad, bevorzugt kleiner 30 Grad und insbesondere bevorzugt parallel zueinander verlaufen.

Die im Zusammenhang mit dem erfindungsgemäßen Verfahren beschriebenen Merkmale und Vorteile des Kerns gelten für den nach diesem Aspekt der Erfindung beschriebenen Kern in analoger Weise.

Gemäß einem weiteren Aspekt der Erfindung ist ein Sandwichbauteil vorgesehen. Das Sandwichbauteil weist eine erste Deckschicht aus einem Faserverbundmaterial, eine zweite Deckschicht aus einem Faserverbundmaterial sowie einen zwischen der ersten und der zweiten Deckschicht angeordneten Kern auf, wobei der Kern gemäß einer der voranstehend beschriebenen Ausführungsformen ausgebildet ist. Das Sandwichbauteil kann beispielsweise mittels des oben beschriebenen Verfahrens auf besonders einfache und effiziente Weise hergestellt werden.

Hierin wird unter einem "Faserwerkstoff", einem "Fasermaterial" allgemein ein Werkstoff verstanden, der aus einer Vielzahl von insbesondere fadenförmigen oder fadenstückförmigen Verstärkungsfasern, wie beispielsweise Kohle-, Glas-, Keramik-, Aramid-, Bor-, Mineral-, Natur- oder Kunststofffasern oder Mischungen aus diesen gebildet ist.

Unter "Faserbändern" oder "Prepreg-Bändern" oder einem "Faserhalbzeug" wird hierin ein Faserwerkstoff verstanden, der mit einem Harz- oder Matrixmaterial wie z.B. einem duroplastischen, thermoplastischen, elastomeren Harz oder allgemein ein Kunststoffharz oder dergleichen imprägniert ist bzw. die Fasern des Faserwerkstoffs sind in das Harz- oder Matrixmaterial eingebettet. Die Faser- oder Prepreg-Bänder sind hierbei zu sich in einer Längsrichtung erstreckenden Bändern konfektioniert. Das Faserhalbzeug kann insbesondere zu einer sich flächig erstreckenden und geschlossenen Matte oder Platte ausgebildet sein, welche mehrere übereinander gestapelte Lagen aus einem Fasermaterial aufweist, wobei sich die Fasern in benachbarten Lagen bevorzugt in verschieden Richtungen erstrecken.

3D-Druckverfahren im Sinne der vorliegenden Anmeldung umfassen alle generativen bzw. additiven Fertigungsverfahren, bei welchen auf der Basis von geometrischen Modellen Objekte vordefinierter Form aus formlosen Materialien wie Flüssigkeiten und Pulvern oder formneutralen Halbzeugen wie etwa band- oder drahtförmigem Material mittels chemischer und/oder physikalischer Prozesse in einem speziellen generativen Fertigungssystem hergestellt werden. 3D-Druckverfahren im Sinne der vorliegenden Anmeldung verwenden dabei additive Prozesse, bei denen das Ausgangsmaterial schichtweise in vorgegebenen Formen sequentiell aufgebaut wird.

Hierin wird unter "einstückig", "einteilig", "integral" oder "in einem Stück" ausgebildeten Komponenten allgemein verstanden, dass diese Komponenten als ein einziges, eine Materialeinheit bildendes Teil vorliegen und insbesondere als ein solches hergestellt sind, wobei die eine von der anderen Komponente nicht ohne Aufhebung des Materialzusammenhalts von der anderen lösbar ist.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner gleich 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig. 1: eine schematische Ansicht eines ersten Schritts eines Verfahrens zur Herstellung eine Sandwichbauteils gemäß einem Ausführungsbeispiel der vorliegenden Erfindung;
- Fig. 2: eine schematische Ansicht eines weiteren Schritts des Verfahrens gemäß einem Ausführungsbeispiel der vorliegenden Erfindung;
- Fig. 3: eine schematische Ansicht eines weiteren Schritts des Verfahrens gemäß einem Ausführungsbeispiel der vorliegenden Erfindung;
- Fig. 4: eine schematische Schnittansicht eines Sandwichbauteils gemäß einem Ausführungsbeispiel der vorliegenden Erfindung;
- Fig. 5: eine schematische Schnittansicht eines Kerns gemäß einem Ausführungsbeispiel der vorliegenden Erfindung;
- Fig. 6: eine schematische Schnittansicht eines Kerns gemäß einem weiteren Ausführungsbeispiel der vorliegenden Erfindung;
- Fig. 7: eine schematische Draufsicht auf eine Ablageoberfläche eines Kerns gemäß einem weiteren Ausführungsbeispiel der vorliegenden Erfindung;
- Fig. 8: eine Detailansicht des in der Fig. 7 durch den Buchstaben X gekennzeichneten Bereichs;
- Fig. 9: eine schematische Schnittansicht eines Sandwichbauteils gemäß einem weiteren Ausführungsbeispiel der vorliegenden Erfindung;
- Fig. 10: eine schematische Schnittansicht eines Sandwichbauteils gemäß einem weiteren Ausführungsbeispiel der vorliegenden Erfindung mit einem Kern gemäß einem weiteren Ausführungsbeispiel der vorliegenden Erfindung;
- Fig. 11: eine schematische Schnittansicht eines Sandwichbauteils gemäß einem weiteren Ausführungsbeispiel der vorliegenden Erfindung mit einem Kern gemäß einem weiteren Ausführungsbeispiel der vorliegenden Erfindung;
- Fig. 12: eine schematische Schnittansicht einer Anordnung von zwei Sandwichbauteilen gemäß jeweils einem weiteren Ausführungsbeispiel der vorliegenden Erfindung; und
- Fig. 13: eine schematische Schnittansicht eines Kerns gemäß einem weiteren Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

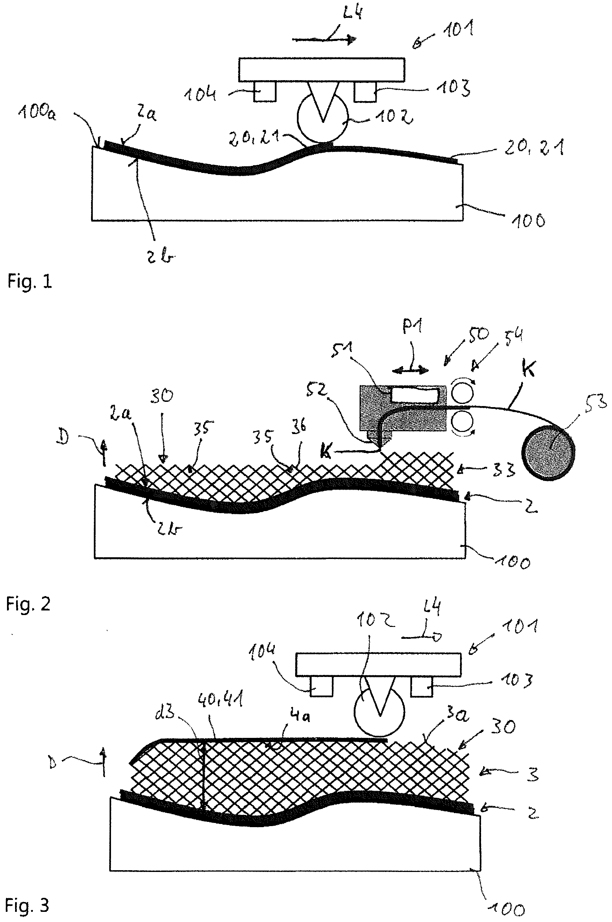

Die Fig. 1 bis 3 zeigen schematisch den Ablauf eines Verfahrens zur Herstellung eines Sandwichbauteils 1.

In Fig. 1 ist ein erster Schritt des Verfahrens gezeigt, bei dem ein Ausbilden einer ersten Deckschicht 2 des Sandwichbauteils 1 erfolgt. Die erste Deckschicht 2 wird optional durch Ablegen von Faserbändern 20 auf einer Formoberfläche 100a eines Formwerkzeugs 100 gebildet. Die Faserbänder 20 weisen jeweils Fasern F auf, die in ein Matrixmaterial M, insbesondere in ein thermoplastisches Matrixmaterial, z.B. PPS oder PEEK, eingebettet sind. Die erste Deckschicht 2 wird durch Ablegen von zumindest einer flächigen, geschlossenen Lage 21 von Faserbändern 20 gebildet. Optional können mehrere Lagen 21 übereinander abgelegt werden, wie dies beispielhaft in Fig. 1 gezeigt ist. Hierbei weisen die Faserbänder 20 in benachbarten Lagen 21 bevorzugt verschiedene Faserorientierungen auf. Die Faserbänder 20 werden optional in einem Zustand abgelegt, in welchem das Matrixmaterial M zumindest an der Oberfläche des jeweiligen Faserbands 20 in einem viskosen Aggregatszustand vorliegt. Alternativ hierzu wird das Matrixmaterial M unmittelbar nach dem Ablegen mittels Wärmezufuhr in einen viskosen Zustand überführt. Dadurch verschmelzen die einzelnen Faserbänder 20 sowie gegebenenfalls die einzelnen Lagen 21 und es wird eine monolithische sich flächig erstreckende erste Deckschicht 2 ausgebildet. Die erste Deckschicht 2 kann auch durch Anlegen eines Faserhalbzeugs (nicht gezeigt) an die Formoberfläche 100a erfolgen. Hierbei wird eine flächige Matte, welche mehrere Lagen eines mit Matrixmaterial imprägnierten Fasermaterials aufweist, an die Formoberfläche 100a angepresst und dadurch entsprechend der Oberflächenkontur der Formoberfläche 100a umgeformt. Das Matrixmaterial liegt dabei in einem verformungsgeeigneten Zustand vor. Das Anlegen an die Formoberfläche 100a kann beispielsweise mittels Anlegen eines Vakuums an der Formoberfläche 100a, mittels eines zweiten Druckstempels (nicht dargestellt), mittels einer Walze (nicht dargestellt) oder in ähnlicher Weise erfolgen.

Die Formoberfläche 100a des Formwerkzeugs 100 kann insbesondere eine dreidimensional zu beschreibende Oberfläche sein, wie dies beispielhaft in den Fig. 1 bis 3 gezeigt ist, oder eine ebene Oberfläche. Durch die Gestaltung der Formoberfläche 100a wird die Gestalt bzw. der Verlauf der ersten Deckschicht 2 definiert.

Das Ablegen der Faserbänder 20 kann beispielsweise mittels eines Ablegekopfes 101 erfolgen, wie dies in Fig. 1 schematisch dargestellt ist. Der Ablegekopf 101 weist hierzu eine oder mehrere Führungs- oder Ablegerollen 102 auf, mittels derer die Faserbänder 20 an die Oberfläche, auf der diese abzulegen sind, geführt und optional an diese angedrückt werden.

Wie in Fig. 1 schematisch gezeigt ist, kann der Ablegekopf 101 weiterhin eine optionale Heizeinrichtung 103 und eine ebenfalls optionale Inspektionseinrichtung 104 aufweisen. Die optionale Heizeinrichtung 103 dient dem Anschmelzen des Matrixmaterials M der Faserbänder 20. Die Inspektionseinrichtung 104 kann beispielsweise als Kamera oder als Ultraschalldetektor ausgebildet sein und dient der optionalen Oberflächeninspektion der Oberflächen der Faserbänder 20 während des Ablegens zur Erkennung von Oberflächendefekten.

Zum Ausbilden der ersten Deckschicht 2 wird der Ablegekopf 101 in einer Ablagerichtung L4 entlang der Formoberfläche 100a des Formwerkzeugs 100 bewegt und die Faserbänder 20 werden mittels der Rolle 102 an die Formoberfläche 100a bzw. gegebenenfalls an die bereits abgelegte Lage 20 angelegt. Hierbei kann optional ein Erwärmen der Faserbänder 20 während des Ablegens mittels der Heizeinrichtung 103 erfolgen. Alternativ oder zusätzlich wird optional die Oberfläche der abgelegten Faserbänder 20 während des Ablegevorgangs mittels der Inspektionseinrichtung 104 auf Oberflächendefekte oder Ablegefehler untersucht. Nach dem Ausbilden der ersten Deckschicht 2 liegt eine Außenoberfläche 2b der Deckschicht 2 an der Formoberfläche 100a an. Eine Innenoberfläche 2a der Deckschicht 2 ist entgegengesetzt zu der Außenoberfläche 2b orientiert.

In einem weiteren Schritt des Verfahrens, der schematisch in Fig. 2 dargestellt ist, erfolgt ein Erzeugen eines Kerns 3 des Sandwichbauteils 1. Hierzu wird mittels eines additiven oder generativen Herstellungsverfahrens eine Zellstruktur 30 mit einer Vielzahl von Zellen 35 in einer Dickenrichtung D auf der ersten Deckschicht 3 aufgebaut. Dies kann beispielsweise mittels eines FDM-3-D-Druck-Verfahren realisiert werden, wie dies in Fig. 2 schematisch illustriert ist. FDM steht hierbei als Abkürzung für den Englischen Ausdruck "Fused Deposition Modeling". Wie in Fig. 3 gezeigt, werden hierbei die Zellen 35 mittels einer 3-D-Druckvorrichtung 50 erzeugt. Diese wird entsprechend dem gewünschten Verlauf von die Zellen 35 bildenden Zellwänden 36 entlang der Innenoberfläche 2a der ersten Deckschicht 2 geführt, wie in Fig. 2 symbolisch durch den Pfeil P1 angedeutet. Die Führung der 3-D-Druckvorrichtung 50 erfolgt vorzugsweise in einer Arbeitsebene oberhalb der Innenoberfläche 2a. Die Zellwände 36 werden dadurch erzeugt, dass ein draht- oder bandförmiges Kunststoffmaterial K durch Erwärmen mittels einer in der 3-D-Druckvorrichtung 50 vorgesehenen Heizeinrichtung 51 verflüssigt und mittels einer Düse 52 der 3-D-Druckvorrichtung 50 durch Extrudieren auf die Innenoberfläche 2a der ersten Deckschicht 2 aufgebracht wird. Dort härtet das Kunststoffmaterial durch Abkühlung aus. Der Aufbau der Zellen 35 erfolgt indem wiederholt, jeweils eine Arbeitsebene abgefahren und dann die Arbeitsebene stapelnd nach oben, also in der Dickenrichtung D verschoben, der Abstand zu der Innenoberfläche 2a also vergrößert wird. Dadurch wird die Zellstruktur 30 schichtweise in der Dickenrichtung D ausgebildet.

Wie in Fig. 2 beispielhaft und schematisch dargestellt, kann die 3-D-Druckvorrichtung 50 eine Vorratsrolle 53 zur Lagerung und Bereitstellung des Kunststoffmaterials K in Bandform sowie eine Führungseinrichtung 54, beispielsweise in Form eines Walzenpaares wie in Fig. 3 dargestellt, zur Führung des bandförmigen Kunststoffmaterials K aufweisen.

Der auf die voranstehend beschriebene Weise erzeugte Kern 3 weist eine flächige Erstreckung entlang der Innenoberfläche 2a der ersten Deckschicht 2 auf. Wie in Fig. 3 gezeigt, bildet die Zellstruktur 30 des Kerns 3, insbesondere die Zellwände 36 der in Bezug auf die Dickenrichtung D äußersten Zellen 35 der Zellstruktur 30 eine Ablageoberfläche 3a des Kerns 3 aus. Die Dicke d3 des Kerns 3 in Bezug auf die Dickenrichtung D kann entlang der flächigen Erstreckung des Kerns 3 variieren, wie dies beispielhaft in Fig. 3 dargestellt ist, oder konstant sein.

Als Kunststoffmaterial K kann insbesondere ein thermoplastische Material verwendet werden, beispielsweise Polykarbonat, kurz PC, Polyetherimid, kurz PEI, oder ähnliche Thermoplaste.

In einem weiteren Schritt des Verfahrens, der schematisch in Fig. 3 dargestellt ist, erfolgt ein Ausbilden einer zweiten Deckschicht 4 des Sandwichbauteils 1. Hierzu werden bevorzugt Faserbändern 40 auf der Ablageoberfläche 3a des Kerns 3 abgelegt. Die Faserbänder 40 können insbesondere identisch zu den oben beschrieben Faserbändern 20, die zur Ausbildung der ersten Deckschicht 2 verwendet werden, ausgebildet sein. Die zweite Deckschicht 4 wird durch Ablegen von zumindest einer flächigen, geschlossenen Lage 41 von Faserbändern 40 gebildet. Optional können mehrere Lagen 41 übereinander abgelegt werden. Die Faserbänder 40 werden optional in einem Zustand abgelegt, in welchem das Matrixmaterial M zumindest an der Oberfläche des jeweiligen Faserbands 40 in einem viskosen Aggregatszustand vorliegt. Alternativ hierzu wird das Matrixmaterial M wird unmittelbar nach dem Ablegen mittels Wärmezufuhr in einen viskosen Zustand überführt. Dadurch verschmelzen die einzelnen Faserbänder 40 sowie gegebenenfalls die einzelnen Lagen 41 und es wird eine monolithische sich flächig erstreckende zweite Deckschicht 4 ausgebildet und gleichzeitig mit dem Kern 3 verbunden.

Die zweite Deckschicht 4 kann auch durch Anlegen eines Faserhalbzeugs (nicht gezeigt) an die Ablageoberfläche 3a des Kerns 3 erfolgen. Hierbei wird eine flächige Matte, welche mehrere Lagen eines mit Matrixmaterial imprägnierten Fasermaterials aufweist, an die Ablageoberfläche 3a angepresst und dadurch entsprechend der Oberflächenkontur der Ablageoberfläche 3a umgeformt. Das Matrixmaterial liegt dabei in einem verformungsgeeigneten Zustand vor. Das Anlegen an die Ablageoberfläche 3a kann beispielsweise mittels Anlegen eines Vakuums an der Ablageoberfläche 3a, mittels eines zweiten Druckstempels (nicht dargestellt), mittels einer Walze (nicht dargestellt) oder in ähnlicher Weise erfolgen.

Während der Erzeugung des Kerns 3 kann optional eine Oberflächeninspektion zur Erkennung von Defekten in der Zellstruktur durchgeführt werden. Dies kann beispielsweise mittels einer optionalen an der 3-D-Druckvorrichtung 50 vorgesehenen Inspektionseinrichtung (nicht gezeigt), insbesondere in Form einer Kamera oder eines Ultraschalldetektors realisiert werden.

Zum Ablegen der Faserbänder 40 kann der oben beschriebene Ablegekopf 101 in derselben Weise verwendet werden wie zur Ausbildung der ersten Deckschicht 2. Insbesondere kann optional ein Erwärmen der Faserbänder 40 während des Ablegens mittels der Heizeinrichtung 103 erfolgen. Auch optional kann die Oberfläche der abgelegten Faserbänder 40 während des Ablegevorgangs mittels der Inspektionseinrichtung 104 auf Oberflächendefekte oder Ablegefehler untersucht werden. Nach dem Ausbilden der zweiten Deckschicht 4 liegt eine Innenoberfläche 4a der zweiten Deckschicht 4 an der Ablageoberfläche 3a des Kerns 3 an bzw. ist mit dieser stoffschlüssig verbunden.

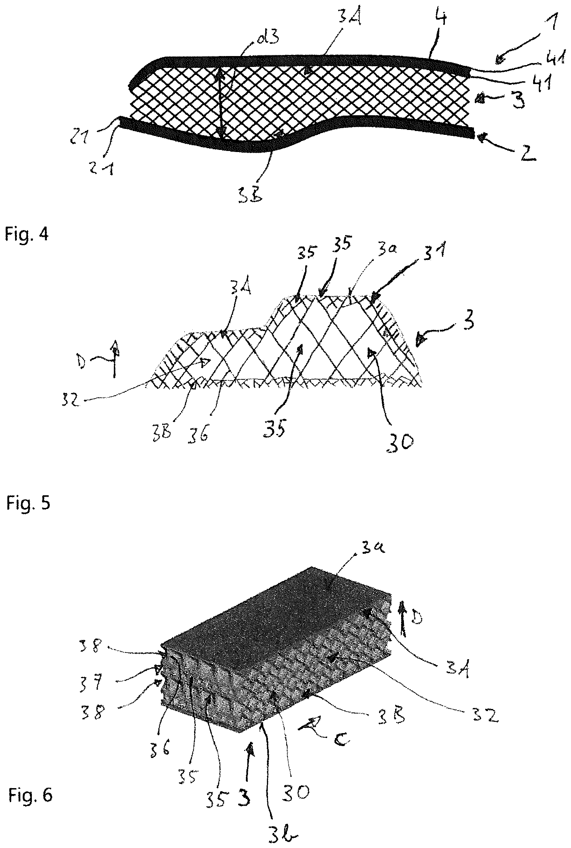

Fig. 4 zeigt ein gemäß dem beschriebenen Verfahren hergestelltes Sandwichbauteil 1 mit der ersten Deckschicht 3, der zweiten Deckschicht 4 und dem zwischen der ersten Deckschicht 2 und der zweiten Deckschicht 4 angeordneten Kern 3.

Nachfolgend wird ein Kern 3 für ein Sandwichbauteil 1 beschrieben. Dieser kann insbesondere in dem anhand der Fig. 1 bis 3 erläuterten Verfahren direkt auf der ersten Deckschicht 2 mittels eines additiven bzw. generativen Herstellungsverfahrens, wie oben beschrieben erzeugt werden. Alternativ kann der Kern 3 mittels eines additiven bzw. generativen Herstellungsverfahrens auf einer eigens hierfür vorgesehenen Konturfläche, beispielsweise der Formoberfläche 100a des Formwerkzeugs 100, erzeugt werden. Zur Erzeugung des Kerns 3 mittels eines additiven bzw. generativen Herstellungsverfahrens kann beispielsweise das anhand der Fig. 2 erläuterte FDM Verfahren durchgeführt werden, wobei die die einzelnen Zellen 35 der Zellstruktur 30 bildenden Zellwände 36 durch schichtweises Auftragen des Kunststoffmaterials K entsprechend dem gewünschten und nachfolgend im Detail beschriebenen Verlauf der Zellwände gebildet werden.

Die Fig. 5 und 6 zeigen jeweils einen Kern 3 mit einer mittels eines additiven Herstellungsverfahrens in einer Dickenrichtung D aufgebauten Zellstruktur 30, welche eine Vielzahl von Zellen 35 aufweist. Die Zellen 35 werden jeweils durch mehrere Zellwände 36 ausgebildet und können insbesondere als geschlossene Zellen 35 vorliegen. Der Kern 3 weist eine flächige Erstreckung auf, insbesondere entlang einer sich quer zur Dickenrichtung erstreckenden Querrichtung C, wie beispielsweise aus Fig. 6 ersichtlich ist. Ferner weist der Kern 3 einen ersten Dickenrandbereich 3A und einen in Bezug auf die Dickenrichtung D entgegengesetzt zu diesem gelegenen zweiten Dickenrandbereich 3B auf. Die in Bezug auf die Dickenrichtung D äußersten Zellen 35 bzw. die diese bildenden Zellwände 36 des zweiten Dickenrandbereichs 3B bilden eine Aufbau- oder Kontaktfläche 3b des Kerns 3. Bei dem oben beschriebenen Verfahren zur Herstellung eines Sandwichbauteils 1 liegt die Kontaktfläche 3b an der Innenoberfläche 2a der ersten Deckschicht 2 an bzw. beim Aufbau der Zellstruktur 30 wird der zweite Dickenrandbereich 3B als erstes erzeugt. Die in Bezug auf die Dickenrichtung D äußersten Zellen 35 bzw. die diese bildenden Zellwände 36 des ersten Dickenrandbereichs 3A bilden die Ablageoberfläche 3a des Kerns 3, auf welche die Faserbänder 40 zur Ausbildung der zweiten Deckschicht 4 abgelegt werden. Der erste Dickenrandbereich 3A bildet somit einen Ablagerandbereich 31 der Zellstruktur 30.

Wie in Fig. 5 beispielhaft gezeigt, kann der Ablagerandbereich 31 eine größere volumenbezogene Zelldichte aufweisen, als ein sich in der Dickenrichtung D anschließender Innenbereich 32 der Zellstruktur 30. Der Innenbereich 32 der Zellstruktur 30 ist in Bezug auf die Dickenrichtung D zwischen dem ersten und dem zweiten Dickenrandbereich 3A, 3B des Kerns 3 gelegen. Optional kann die Zellstruktur 30 zusätzlich auch in dem zweiten Dickenrandbereich 3B des Kerns 3 eine größere volumenbezogene Zelldichte aufweisen, als im Innenbereich 32, wie dies in Fig. 5 beispielhaft gezeigt ist. Bei dem in Fig. 5 beispielhaft gezeigten Kern 3 weisen die den Innenbereich 32 der Zellstruktur 30 bildenden Zellen 35 jeweils im Wesentlich die gleiche Größe bzw. gleiches Volumen auf. Bei dem oben beschriebenen Verfahren zur Herstellung eines Sandwichteils 1 wird beim Aufbau der Zellstruktur 30 mittels eines 3-D-Druckverfahrens somit zunächst der zweite Dickenrandbereich 3B des Kerns 3 ausgebildet, optional als Kontaktrandbereich mit einer hohen Volumenbezogenen Zelldichte, wie in Fig. 5 gezeigt. Anschließend wird der Innenbereich 32 und danach der erste Dickenrandbereich 3A ausgebildet, wobei in oder durch den ersten Dickenrandbereich 3A optional einen Ablagerandbereich 31 mit einer gegenüber dem Innenbereich 32 größeren volumenbezogenen Zelldichte ausgebildet wird. Durch die optional jeweils vergrößerte Zelldichte in dem ersten und dem zweiten Dickenrandbereich 3A, 3B wird jeweils die Kontaktoberfläche zur Anlage an die Deckschichten 2, 4 vergrößert. Dadurch ergibt sich eine verbesserte Adhäsion der Deckschichten am Kern 3 sowie eine größere mechanische Steifigkeit des Kerns 3.

Fig. 6 zeigt beispielhaft einen Kern 3, bei dem die die Ablageoberfläche 3a des Kerns 3 bildenden Zellen 35 mit einem Füllmaterial gefüllt sind. Wie in Fig. 6 erkennbar sind hierbei die in Bezug auf die Dickenrichtung D äußersten Zellen 35 des ersten Dickenrandbereichs 3A bzw. des Ablagerandbereichs 31 mit Füllmaterial gefüllt. Auf diese Weise werden von den Zellwänden 36 umgrenzte Öffnungen bzw. Ausnehmungen ausgefüllt, sodass eine geschlossene Ablageoberfläche 3a gebildet wird, wie dies in Fig. 6 beispielhaft gezeigt ist. Optional können auch die in Bezug auf die Dickenrichtung D äußersten Zellen 35 des zweiten Dickenrandbereichs 3B mit einem Füllmaterial gefüllt sein. Das Füllen der Zellen 35 kann beispielsweise bei der Erzeugung der Zellen 35 mittels des additiven Herstellungsverfahrens beim Aufbau der Zellstruktur 30 erfolgen.

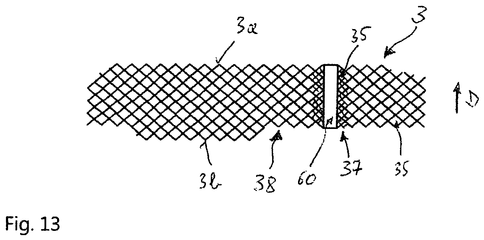

Wie die Fig. 6 und 13 weiterhin zeigen, können zur Erhöhung der mechanischen Festigkeit des Kerns 3 innerhalb der Zellstruktur 30 Bereiche 37 vorgesehen sein, welche eine größere volumenbezogene Zelldichte aufweisen, als benachbart gelegene Bereiche 38. Bei dem in Fig. 6 beispielhaft gezeigten Kern 3 ist im Innenbereich 32 ein erster Teilbereich 37 mit einer hohen Zelldichte vorgesehen, der sich quer zu der Dickenrichtung D erstreckt. Dieser erste Teilbereich 37 ist in Bezug auf die Dickenrichtung D zwischen zwei zweiten Teilbereichen 38 gelegen, welche jeweils eine kleinere volumenbezogene Zelldichte aufweisen als der erste Teilbereich 37. Alternativ oder zusätzlich hierzu kann auch vorgesehen sein, dass die Zellwände 36 der Zellen 35 des ersten Teilbereichs 37 aus einem Material gebildet sind, welches eine größere mechanische Festigkeit aufweist, als das Material der Zellwände 36 der Zellen 35 in den zweiten Teilbereichen 38. Weiterhin können die Zellwände 36 der Zellen 35 des ersten Teilbereichs 37 auch eine größere Wandstärke aufweisen, als die Zellwände 36 der Zellen 35 in benachbart gelegenen Teilbereichen 38.

Bei dem in Fig. 13 beispielhaft gezeigten Kern 3 ist ein erster Teilbereich 37 vorgesehen, der sich entlang der Dickenrichtung D zwischen der Ablageoberfläche 3a und der in Bezug auf die Dickenrichtung D entgegengesetzt gelegenen Kontaktfläche 3b des Kerns 3 erstreckt. Der erste Teilbereich 37 kann insbesondere säulenartig ausgebildet sein, wie in Fig. 13 beispielhaft gezeigt, und weist eine größere volumenbezogene Zelldichte auf, als die ihn umgebenden zweiten Teilbereiche 38. Selbstverständlich kann anstelle der vergrößerten Zelldichte auch vorgesehen sein, dass die Zellen 35 des ersten Teilbereichs 37 mit einem Füllmaterial gefüllt, mit einer größeren Wandstärke ausgebildet oder aus einem widerstandsfähigeren Material gebildet sind, als die Zellen 35 der zweiten Teilbereiche 38. In Fig. 13 ist beispielhaft weiterhin gezeigt, dass in dem ersten Teilbereich 37 eine sich zwischen Ablageoberfläche 3a und der Kontaktfläche 3b erstreckende Ausnehmung 60 ausgebildet sein kann. Diese kann beispielsweise zur Aufnahme einer Befestigungsvorrichtung, wie z.B. eines Bolzens oder dergleichen, vorgesehen sein.

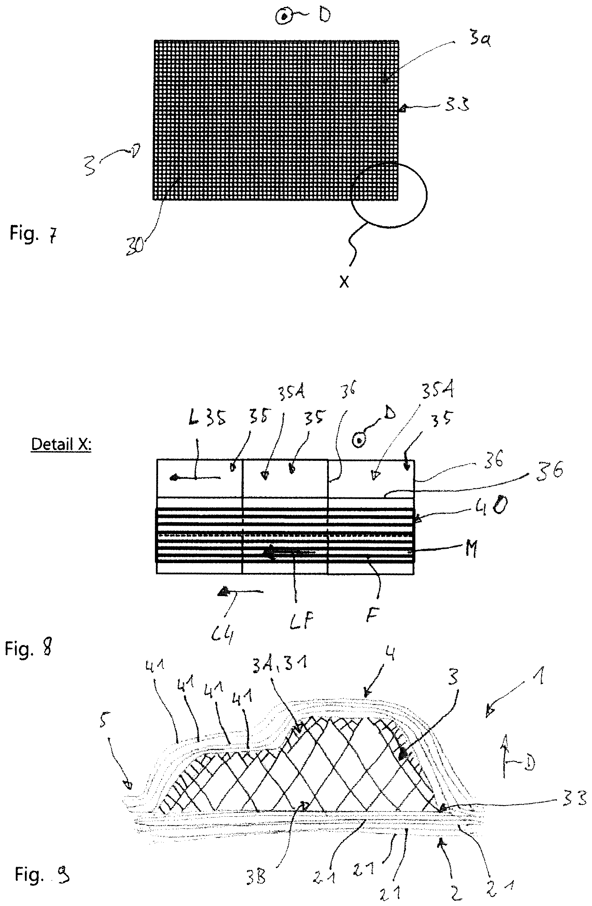

In den Fig. 7 und 8 ist jeweils eine Draufsicht auf die Ablageoberfläche 3a eines Kerns 3 gezeigt. In der in Fig. 8 Draufsicht ist zusätzlich ein Faserband 40 dargestellt, das beispielsweise bei der Ausbildung der zweiten Deckschicht 4 während des oben erläuterten Verfahrens auf die Ablageoberfläche 3a des Kerns 3 abgelegt wurde. Bei der Herstellung des Kerns 3 wurden die die Ablageoberfläche 3a bildenden Zellen 35, also die in Bezug auf die Dickenrichtung D entgegengesetzt zu der ersten Deckschicht 2 gelegenen Zellen 35 zumindest in Teilbereichen der flächigen Erstreckung der Ablageoberfläche 3a also offene Zellen 35 ausgebildet. Das heißt, die die Zellen 35 bildenden Zellwände 36 definieren, wie in Fig. 6 beispielhaft gezeigt ist, Öffnungen oder Vertiefungen 35A. Beim Ablegen von Faserbändern 40 auf die Ablageoberfläche 3a des Kerns 3 soll möglichst vermieden werden, dass die sich über die Öffnungen 35A erstreckenden Faserbänder 40 durchhängen, was insbesondere aufgrund des viskosen Zustands des Matrixmaterials M eintreten kann, um die Ausbildung von Dellen in der zweiten Deckschicht 4 des Sandwichbauteils 1 zu vermeiden. Bei dem in Fig. 5 beispielhaft gezeigten Kern 3 wird die Gefahr des Durchhängens dadurch verringert, dass die Öffnungen 35A durch die vergrößerte Zelldichte im Ablagerandbereich 31 möglichst klein gestaltet sind. Bei dem in Fig. 6 gezeigten Kern 3 werden die Öffnungen 35A ausgefüllt. Gemäß der in Fig. 8 gezeigten optionalen Gestaltung des Kerns 3 werden die Zellen 35 im Ablagerandbereich 31 mit deren Zellwänden 36 entsprechend der Ablagerichtung L4 der Faserbänder 40 ausgerichtet bzw. entsprechend ausgebildet. In Fig. 8 definieren die Zellwände 36 eine rechteckförmige Öffnung 35A mit einer Längserstreckung in der Richtung L35. Diese Längserstreckung L35 verläuft entlang der Ablagerichtung L4, in welcher die Faserbänder 40 mit deren Faserlängsrichtung LF abgelegt werden. Auf diese Weise überspannen die an sich steifen Faser F die Öffnungen 35A der Länge nach, wodurch Durchhänge vermieden werden.

Die Fig. 9 bis 12 zeigen optionale Gestaltungen eines Sandwichbauteils 1. Das Sandwichbauteil 1 kann insbesondere mit dem oben beschriebenen Verfahren hergestellt sein und weist insbesondere einen Kern 3 auf, der wie voranstehend beschrieben gestaltet sein kann.

Das in Fig. 9 beispielhaft gezeigte Sandwichteil 1 weist den in Fig. 5 gezeigten Kern 3 auf. Der ist in Bezug auf die Dickenrichtung D zwischen einer ersten Deckschicht 2 und einer zweiten Deckschicht 4 angeordnet. Die erste Deckschicht ist mit den in Bezug auf die Dickenrichtung D äußersten Zellen 35 des zweiten Dickenrandbereichs 3B des Kern 3 verbunden. Die zweite Deckschicht 4 ist mit den in Bezug auf die Dickenrichtung D äußersten Zellen 35 des ersten Dickenrandbereichs 3A bzw. mit der Ablageoberfläche 3a des Kerns verbunden. Wie in Fig. 9 weiterhin gezeigt ist, erstrecken sich die erste Deckschicht 2 und die zweite Deckschicht 4 jeweils über einen Umfangsrand 33 des Kerns 3 bzw. der Zellstruktur 30 des Kerns 3 hinaus. Umfangsrand 33 umgrenzt bzw. begrenzt oder definiert die flächige Erstreckung des Kerns 3. Die über den Umfangsrand 33 hinausragenden Bereiche der ersten Deckschicht 2 und die über den Umfangsrand 33 hinausragenden Bereiche der zweiten Deckschicht 4 sind miteinander verbunden, insbesondere stoffschlüssig, und bilden einen monolithischen Umfangsrandbereich 5 des Sandwichbauteils 1. Die stoffschlüssige Verbindung kann insbesondere beim Ablegen der Faserbänder 40 beim Ausbilden der zweiten Deckschicht 4 ausgebildet werden, wenn die Faserbänder 40 mit viskosem Zustand des Matrixmaterials M über den Umfangsrand 33 der Zellstruktur 30 hinaus auf die Innenoberfläche 2a der unteren Deckschicht 2 abgelegt werden. Der Umfangsrandbereich 5 kann insbesondere zur strukturellen Anbindung des Sandwichbauteils 1 genutzt werden und eignet sich beispielsweise zur Anbringung von Befestigungsvorrichtungen wie Schrauben, Nieten, Bolzen und dergleichen.

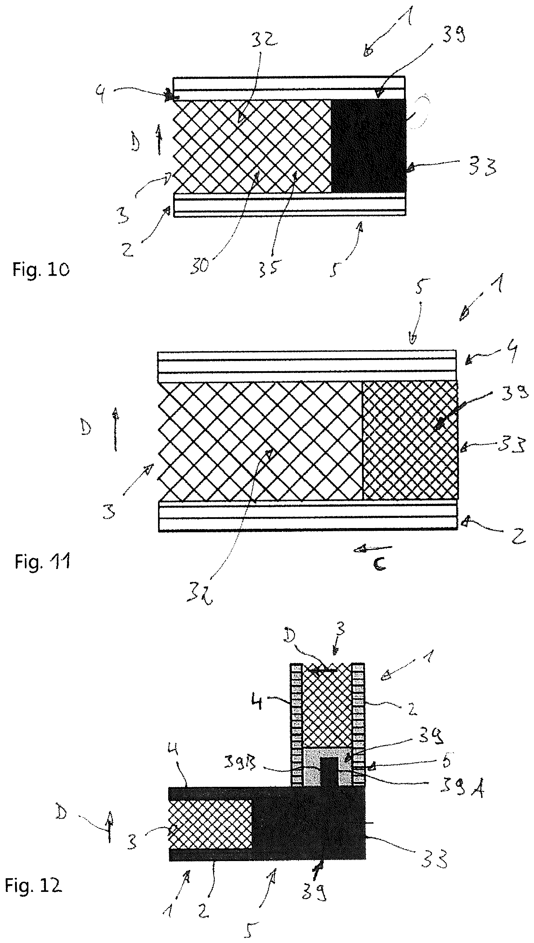

Fig. 10 zeigt eine Querschnittsansicht einer weiteren optionalen Gestaltung des Umfangsrandbereichs 5 des Sandwichbauteils 1. Wie in Fig. 10 beispielhaft gezeigt, weist die Zellstruktur 30 des Kerns 3 einen Umfangsrandbereich 39 aufweist, welcher sich von einem Umfangsrand 33 der Zellstruktur 30 aus, insbesondere quer zur Dickenrichtung D ins Innere der Zellstruktur 30 hinein erstreckt. Die Zellen 35 des Umfangsrandbereichs 39 der Zellstruktur 30 sind mit einem Füllmaterial gefüllt, was insbesondere beim Aufbau der Zellstruktur 30 erfolgen kann. Die Zellstruktur 30 kann also mit einem massiven Umfangsrandbereich 39 aufgebaut werden. Alternativ hierzu können die Zellen 35 des Umfangsrandbereichs 39 der Zellstruktur 30 nachträglich mit einem Füllmaterial gefüllt werden. Die erste und die zweite Deckschicht 2, 4 überlappen den Umfangsrandbereich 39 der Zellstruktur 30 und schließen bündig mit dem Umfangsrand 33 der Zellstruktur 30 ab. Das Füllen der Zellen 35 bietet den Vorteil, dass das Eindringen von Flüssigkeit ins Innere des Kerns 3 zuverlässig verhindert wird. Weiterhin können in die ausgefüllten Zellen 35 Befestigungsvorrichtungen, wie Schrauben, Nieten, Bolzen oder dergleichen, eingebracht und dort mit großer Zuverlässigkeit und Tragkraft verankert werden. Auch wird in den in Bezug auf die Dickenrichtung D äußersten Zellen 35 eine zuverlässige Adhäsion zwischen Kern 3 und Deckschichten 2, 4 erzielt, wenn diese ebenfalls ausgefüllt sind, wie dies in Fig. 10 beispielhaft gezeigt ist.

Fig. 11 zeigt eine Querschnittsansicht einer weiteren optionalen Gestaltung des Umfangsrandbereichs 5 des Sandwichbauteils 1. Im Unterschied zu Fig. 10 sind die Zellen 35 des Umfangsrandbereich 39 der Zellstruktur 30 des Kerns 3 des in Fig. 11 beispielhaft gezeigten Sandwichbauteils 1 nicht mit einem Füllmaterial gefüllt, sondern weisen eine größere volumenbezogene Zelldichte auf, als ein sich an den Umfangsrandbereich 39 anschließender Innenbereich 32 der Zellstruktur 30. Dies bietet den Vorteil, dass die mechanische Steifigkeit des Kerns 3 bei geringem Gewicht desselben vergrößert wird. Auch bei dieser Gestaltung wird das Anbringen von Befestigungsvorrichtungen im Umfangsrandbereich 39 erleichtert sowie die Adhäsion zwischen Kern 3 und Deckschichten 2, 4 verbessert.

In Fig. 12 ist eine Anordnung von Sandwichbauteilen 1 gezeigt. Hierbei sind die Umfangsrandbereiche 5 der Sandwichbauteile 1 mechanisch aneinander gekoppelt. Die Fig. 12 zeigt auch eine weitere optionale Gestaltung der Umfangsrandbereiche 5 der Sandwichbauteile 1. Die Umfangsrandbereiche 39 der Zellstrukturen 30 der Kerne 3 der Sandwichbauteile 1 sind, wie anhand Fig. 10 erläutert, mit gefüllten Zellen 35 bzw. massiv ausgebildet. Wie in Fig. 12 weiterhin gezeigt, ist in dem jeweiligen Umfangsrandbereich 39 ein Anschlussabschnitt 39A, 39B ausgebildet. Der Anschlussabschnitt kann insbesondere in Form eines Stifts 39A oder einer Ausnehmung 39B realisiert sein. In Fig. 12 weist der Umfangsrandbereich 39 der Zellstruktur 30 des Kerns 3 des Sandwichbauteils 1, das in der Darstellung der Fig. 12 unten gelegen ist, einen in der Dickenrichtung D von dem Umfangsrandbereich 39 vorspringenden Stift 39A auf. Selbstverständlich kann der Stift 39 sich auch quer zu der Dickenrichtung D vom Umfangsrand 33 aus erstrecken oder allgemein von dem Umfangsrandbereich 39 aus. Der Umfangsrandbereich 39 der Zellstruktur 30 des Kerns 3 des Sandwichbauteils 1, das in der Darstellung der Fig. 12 oben gelegen ist, weist eine sich quer zu der Dickenrichtung D vom Umfangsrand 33 aus erstreckende Ausnehmung 39B auf. Selbstverständlich kann die Ausnehmung 39B sich auch entlang der Dickenrichtung D oder allgemein in den Umfangsrandbereich 39 hinein erstrecken. Wie in Fig. 12 gezeigt ist, ist der Stift 39A in die Ausnehmung 39B eingeführt, wodurch eine formschlüssigen Befestigen der Kerne 3 aneinander realisiert wird

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1: Sandwichbauteil
- 2: erste Deckschicht
- 2a: Innenoberfläche der ersten Deckschicht
- 2b: Außenoberfläche der ersten Deckschicht
- 3: Kern
- 3A: erster Dickenrandbereich des Kerns
- 3a: Ablageoberfläche des Kerns
- 3B: zweiter Dickenrandbereich des Kerns
- 4: zweite Deckschicht
- 4a: Innenoberfläche der zweiten Deckschicht
- 5: Umfangsrandbereich des Sandwichbauteils
- 20, 40: Faserbänder
- 21, 41: Lage
- 30: Zellstruktur des Kerns
- 31: Ablagerandbereich der Zellstruktur
- 32: Innenbereich der Zellstruktur
- 33: Umfangsrand der Zellstruktur
- 35: Zellen
- 35A: Vertiefungen
- 36: Zellwände
- 37: Bereich der Zellstruktur
- 38: Bereich der Zellstruktur
- 39: Umfangsrandbereich der Zellstruktur
- 39A: Stift
- 39B: Ausnehmung
- 50: 3-D-Druckvorrichtung
- 51: Heizeinrichtung der 3-D-Druckvorrichtung
- 52: Düse der 3-D-Druckvorrichtung
- 53: Vorratsrolle
- 54: Führungseinrichtung
- 60: Ausnehmung
- 100: Formwerkzeug
- 100a: Formoberfläche
- 101: Ablegekopf
- 102: Ablegerolle
- 103: Heizeinrichtung
- 104: Inspektionseinrichtung
- C: Querrichtung
- D: Dickenrichtung
- d3: Dicke des Kerns
- F: Faser
- K: Kunststoffmaterial
- L4: Ablagerichtung
- L35: Längserstreckung der Zellen
- LF: Faserlängsrichtung
- M: Matrixmaterial
- P1: Pfeil

## Patentansprüche

1. Verfahren zur Herstellung eines Sandwichbauteils (1) mit folgenden Schritten:
Ausbilden einer ersten Deckschicht (2) auf einer Formoberfläche (100a) eines Formwerkzeugs (100) durch Ablegen von Faserbändern (20) auf der Formoberfläche (100a) des Formwerkzeugs (100) oder durch Anlegen eines sich flächig erstreckenden Faserhalbzeugs an die Formoberfläche (100a) des Formwerkzeugs (100);
Erzeugen eines Kerns (3) durch Aufbauen einer Zellstruktur (30) mit einer Vielzahl von Zellen (35) in einer Dickenrichtung (D) auf der ersten Deckschicht (2) mittels eines additiven Herstellungsverfahrens;
Ausbilden einer zweiten Deckschicht (4) auf einer entgegengesetzt zu der ersten Deckschicht (2) gelegenen Ablageoberfläche (3a) des Kerns (3) durch Ablegen von Faserbändern (40) auf die Ablageoberfläche (3a) des Kerns (3) oder durch Anlegen eines sich flächig erstreckenden Faserhalbzeugs an die Ablageoberfläche (3a) des Kerns (3),
wobei als additives Herstellungsverfahren zur Erzeugung des Kerns (3) ein FDM-3-D-Druck-Verfahren durchgeführt wird.

2. Verfahren nach Anspruch 1, wobei die Faserbänder (20, 40) zur Ausbildung der ersten Deckschicht (2) und/oder der zweiten Deckschicht (4) oder das Faserhalbzeug zur Ausbildung der ersten Deckschicht (2) und/oder der zweiten Deckschicht (4) jeweils ein thermoplastisches Matrixmaterial aufweisen.

3. Verfahren nach einem der voranstehenden Ansprüche, wobei die Zellstruktur (30) des Kerns (3) aus einem thermoplastischen Material aufgebaut wird.

4. Verfahren nach einem der voranstehenden Ansprüche, wobei die Zellstruktur (30) des Kerns (3) mit einem in Bezug auf die Dickenrichtung (D) entgegengesetzt zu der ersten Deckschicht (2) gelegenen Ablagerandbereich (31) ausgebildet wird, welcher eine größere volumenbezogene Zelldichte aufweist, als ein sich in der Dickenrichtung (D) anschließender Innenbereich (32) der Zellstruktur (30).

5. Verfahren nach einem der voranstehenden Ansprüche, wobei die in Bezug auf die Dickenrichtung (D) entgegengesetzt zu der ersten Deckschicht (2) gelegenen und die Ablageoberfläche (3a) ausbildenden Zellen (35) derart ausgebildet werden, dass eine Längserstreckung (L35) der Zellen (35) entlang einer Ablagerichtung (L4) verläuft, in welcher die Faserbänder (40) mit deren Faserlängsrichtung (LF) abgelegt werden.

6. Verfahren nach einem der voranstehenden Ansprüche, wobei die in Bezug auf die Dickenrichtung (D) entgegengesetzt zu der ersten Deckschicht (2) gelegenen und die Ablageoberfläche (3a) ausbildenden Zellen (35) mit einem Füllmaterial gefüllt werden.

7. Verfahren nach Anspruch 6, wobei das Füllen der Zellen (35) zur Ausbildung der Ablageoberfläche (3a) mittels des additiven Herstellungsverfahrens beim Aufbau der Zellstruktur (30) erfolgt.

8. Verfahren nach einem der voranstehenden Ansprüche, wobei die Zellstruktur (30) des Kerns (3) zur Erhöhung der mechanischen Festigkeit des Kerns (3) derart aufgebaut wird, dass Bereiche (37) ausgebildet werden,
- welche eine größere volumenbezogene Zelldichte aufweisen, als benachbart gelegene Bereiche (38) oder
- in welchen die Zellen (35) mit Zellwänden (36) aus einem Material gebildet werden, welches eine größere mechanische Festigkeit aufweist, als die Zellwände (36) der Zellen (35) in benachbart gelegenen Bereichen (38) oder
- in welchen die Zellwände (36) der Zellen (35) eine größere Wandstärke aufweisen, als die Zellwände (36) der Zellen (35) in benachbart gelegenen Bereichen (38) oder
- in welchen die Zellen (35) mit einem Füllmaterial gefüllt werden.

9. Verfahren nach einem der voranstehenden Ansprüche, wobei während des Ausbildens der ersten Deckschicht (2) und/oder während der Erzeugung des Kerns (3) und/oder während des Ausbildens der zweiten Deckschicht (4) eine Oberflächeninspektion zur Erkennung von Oberflächendefekten durchgeführt wird.

10. Sandwichbauteil (1), hergestellt mit einem Verfahren nach einem der voranstehenden Ansprüchen.

11. Sandwichbauteil (1) nach Anspruch 10, wobei die Zellstruktur (30) des Kerns (3) in Bezug auf die Dickenrichtung (D) einen Ablagerandbereich (31) aufweist, welcher eine größere volumenbezogene Zelldichte aufweist, als ein sich in der Dickenrichtung (D) anschließender Innenbereich (32) der Zellstruktur (30).

12. Sandwichbauteil (1) nach Anspruch 10 oder 11, wobei die in Bezug auf die Dickenrichtung (D) eine Ablageoberfläche (3a) des Kerns (3) bildenden Zellen (35) mit einem Füllmaterial gefüllt sind.

13. Sandwichbauteil (1) nach einem der Ansprüche 10 bis 12, wobei die Zellstruktur (30) zur Erhöhung der mechanischen Festigkeit des Kerns (3) Bereiche (37) aufweist,
- welche eine größere volumenbezogene Zelldichte aufweisen, als benachbart gelegene Bereiche (38),
- in welchen die Zellen (35) Zellwände (36) aus einem Material aufweisen, welches eine größere mechanische Festigkeit aufweist, als die Zellwände (36) der Zellen (35) in benachbart gelegenen Bereichen (38), oder
- in welchen die Zellwände (36) der Zellen (35) eine größere Wandstärke aufweisen, als die Zellwände (36) der Zellen (35) in benachbart gelegenen Bereichen (38).

14. Sandwichbauteil (1) nach einem der Ansprüche 10 bis 13, wobei die Zellstruktur (30) einen Umfangsrandbereich (39) aufweist, welcher sich von einem Umfangsrand (33) der Zellstruktur (30) aus erstreckt, wobei der Umfangsrandbereich (39) eine größere volumenbezogene Zelldichte aufweist, als ein sich an den Umfangsrandbereich (39) anschließender Innenbereich (32) der Zellstruktur (30), oder wobei die Zellen (35) des Umfangsrandbereichs (39) mit einem Füllmaterial gefüllt sind.

15. Sandwichbauteil (1) nach Anspruch 14, wobei in dem Umfangsrandbereich (39) ein Anschlussabschnitt (39A; 39B), insbesondere in Form eines Stifts (39A) oder einer Ausnehmung (39B), zum formschlüssigen Befestigen des Kerns (3) ausgebildet ist.

## Claims

1. Process for producing a sandwich component (1), comprising the following steps:
forming a first cover layer (2) on a mould surface (100a) of a moulding tool (100) by depositing fibre strips (20) on the mould surface (100a) of the moulding tool (100) or by placing an areally extending fibre semi-finished product onto the mould surface (100a) of the moulding tool (100);
creating a core (3) by constructing a cell structure (30) having a multiplicity of cells (35) in a thickness direction (D) on the first cover layer (2) by means of an additive manufacturing process;
forming a second cover layer (4) on a deposition surface (3a), situated opposite the first cover layer (2), of the core (3) by depositing fibre strips (40) onto the deposition surface (3a) of the core (3) or by placing an areally extending fibre semi-finished product onto the deposition surface (3a) of the core (3);
wherein the additive manufacturing process used to create the core (3) is a FDM 3D printing process.

2. Process according to Claim 1, wherein the fibre strips (20, 40) for forming the first cover layer (2) and/or the second cover layer (4) or the fibre semi-finished product for forming the first cover layer (2) and/or the second cover layer (4) each comprise a thermoplastic matrix material.

3. Process according to one of the preceding claims, wherein the cell structure (30) of the core (3) is constructed from a thermoplastic material.

4. Process according to one of the preceding claims, wherein the cell structure (30) of the core (3) is formed with a deposition boundary region (31) which is situated opposite the first cover layer (2) with respect to the thickness direction (D) and has a greater relative cell density than an inner region (32) of the cell structure (30) adjoining it in the thickness direction (D) does.

5. Process according to one of the preceding claims, wherein the cells (35) situated opposite the first cover layer (2) with respect to the thickness direction (D) and forming the deposition surface (3a) are formed such that a longitudinal extent (L35) of the cells (35) extends along a deposition direction (L4) matching the fibre longitudinal extent (LF) of the fibre strips (40) when the latter are deposited.

6. Process according to one of the preceding claims, wherein the cells (35) situated opposite the first cover layer (2) with respect to the thickness direction (D) and forming the deposition surface (3a) are filled with a filler material.

7. Process according to Claim 6, wherein the cells (35) for forming the deposition surface (3a) by means of the additive manufacturing process are filled when the cell structure (30) is being constructed.

8. Process according to one of the preceding claims, wherein, to increase the mechanical strength of the core (3), the cell structure (30) of the core (3) is constructed so as to form regions (37)
- which have a greater relative cell density than adjacent regions (38) do, or
- in which the cells (35) are formed with cell walls (36) made of a material which has a greater mechanical strength than the cell walls (36) of the cells (35) in adjacent regions (38) do, or
- in which the cell walls (36) of the cells (35) have a greater wall thickness than the cell walls (36) of the cells (35) in adjacent regions (38) do, or
- in which the cells (35) are filled with a filler material.

9. Process according to one of the preceding claims, wherein the surfaces are inspected to identify surface defects while the first cover layer (2) is being formed and/or while the core (3) is being created and/or while the second cover layer (4) is being formed.

10. Sandwich component (1) produced by a process according to one of the preceding claims.

11. Sandwich component (1) according to Claim 10, wherein the cell structure (30) of the core (3), with respect to the thickness direction (D), has a deposition boundary region (31) which has a greater relative cell density than an inner region (32) of the cell structure (30) adjoining it in the thickness direction (D) does.

12. Sandwich component (1) according to Claim 10 or 11, wherein the cells (35) forming a deposition surface (3a) of the core (3) with respect to the thickness direction (D) are filled with a filler material.

13. Sandwich component (1) according to one of Claims 10 to 12, wherein, to increase the mechanical strength of the core (3), the cell structure (30) has regions (37)
- which have a greater relative cell density than adjacent regions (38) do,
- in which the cells (35) have cell walls (36) made of a material which has a greater mechanical strength than the cell walls (36) of the cells (35) in adjacent regions (38) do, or
- in which the cell walls (36) of the cells (35) have a greater wall thickness than the cell walls (36) of the cells (35) in adjacent regions (38) do.

14. Sandwich component (1) according to one of Claims 10 to 13, wherein the cell structure (30) has a peripheral boundary region (39) which extends from a peripheral boundary (33) of the cell structure (30), wherein the peripheral boundary region (39) has a greater relative cell density than an inner region (32) of the cell structure (30) adjoining the peripheral boundary region (39), or wherein the cells (35) of the peripheral boundary region (39) are filled with a filler material.

15. Sandwich component (1) according to Claim 14, wherein a connecting portion (39A; 39B), in particular in the form of a pin (39A) or a recess (39B), for form-fitting attachment of the core (3) is formed in the peripheral boundary region (39).

## Revendications

1. Procédé de fabrication d'un composant sandwich (1), comprenant les étapes suivantes :
former une première couche de recouvrement (2) sur une surface de moulage (100a) d'un outil de moulage (100) en déposant des rubans de fibres (20) sur la surface de moulage (100a) de l'outil de moulage (100) ou en appliquant un semi-produit de fibres s'étendant à plat sur la surface de moulage (100a) de l'outil de moulage (100) ;
produire une âme (3) en construisant une structure cellulaire (30) avec une pluralité de cellules (35) dans une direction d'épaisseur (D) sur la première couche de recouvrement (2) au moyen d'un procédé de fabrication additive ;
former une deuxième couche de recouvrement (4) sur une surface de dépôt (3a) de l'âme (3) située à l'opposé de la première couche de recouvrement (2) en déposant des rubans de fibres (40) sur la surface de dépôt (3a) de l'âme (3) ou en appliquant un semi-produit de fibres s'étendant à plat sur la surface de dépôt (3a) de l'âme (3),
un procédé d'impression 3D FDM étant mis en œuvre en tant que procédé de fabrication additive pour la production de l'âme (3).

2. Procédé selon la revendication 1, dans lequel les rubans de fibres (20, 40) pour la formation de la première couche de recouvrement (2) et/ou de la deuxième couche de recouvrement (4) ou le semi-produit en fibres pour la formation de la première couche de recouvrement (2) et/ou de la deuxième couche de recouvrement (4) présentent chacun un matériau de matrice thermoplastique.

3. Procédé selon l'une des revendications précédentes, dans lequel la structure cellulaire (30) de l'âme (3) est construite à partir 6d'un matériau thermoplastique.

4. Procédé selon l'une des revendications précédentes, dans lequel la structure cellulaire (30) de l'âme (3) est réalisée avec une zone de bord de dépôt (31) située à l'opposé de la première couche de recouvrement (2) par rapport à la direction de l'épaisseur (D), qui présente une densité cellulaire liée au volume plus grande qu'une zone intérieure (32) de la structure cellulaire (30) se raccordant dans la direction de l'épaisseur (D).

5. Procédé selon l'une des revendications précédentes, dans lequel les cellules (35) situées à l'opposé de la première couche de recouvrement (2) par rapport à la direction de l'épaisseur (D) et formant la surface de dépôt (3a) sont formées de telle sorte qu'une extension longitudinale (L35) des cellules (35) s'étend le long d'une direction de dépôt (L4) selon laquelle les rubans de fibres (40) sont déposés selon leur direction longitudinale de fibres (LF).

6. Procédé selon l'une des revendications précédentes, dans lequel les cellules (35) situées à l'opposé de la première couche de recouvrement (2) par rapport à la direction d'épaisseur (D) et formant la surface de dépôt (3a) sont remplies d'un matériau de remplissage.

7. Procédé selon la revendication 6, dans lequel le remplissage des cellules (35) pour former la surface de dépôt (3a) est effectué au moyen du procédé de fabrication additive lors de la construction de la structure cellulaire (30).

8. Procédé selon l'une des revendications précédentes, dans lequel la structure cellulaire (30) de l'âme (3) est construite de façon à augmenter la résistance mécanique de l'âme (3) de telle sorte que des zones (37) sont formées,
- qui présentent une plus grande densité de cellules par rapport au volume que les zones voisines (38) ou
- dans lesquelles les cellules (35) sont formées avec des parois cellulaires (36) en un matériau qui présente une plus grande résistance mécanique que les parois cellulaires (36) des cellules (35) dans des zones (38) situées à proximité, ou
- dans lesquelles les parois cellulaires (36) des cellules (35) présentent une épaisseur de paroi supérieure à celle des parois cellulaires (36) des cellules (35) dans des zones (38) situées à proximité, ou
- dans lesquelles les cellules (35) sont remplies d'un matériau de remplissage.

9. Procédé selon l'une des revendications précédentes, dans lequel, pendant la formation de la première couche de recouvrement (2) et/ou pendant la production de l'âme (3) et/ou pendant la formation de la deuxième couche de recouvrement (4), on effectue une inspection de surface pour détecter des défauts de surface.

10. Élément sandwich (1), fabriqué par un procédé selon l'une des revendications précédentes.

11. Composant sandwich (1) selon la revendication 10, dans lequel la structure cellulaire (30) de l'âme (3) présente, par rapport à la direction de l'épaisseur (D), une zone de bord de dépôt (31) qui présente une densité cellulaire liée au volume supérieure à celle d'une zone interne adjacente (32) de la structure cellulaire (30) dans la direction de l'épaisseur (D).

12. Composant sandwich (1) selon la revendication 10 ou la revendication 11, dans lequel les cellules (35) formant une surface de dépôt (3a) de l'âme (3) par rapport à la direction de l'épaisseur (D) sont remplies d'un matériau de remplissage.

13. Composant sandwich (1) selon l'une des revendications 10 à 12, dans lequel la structure cellulaire (30) présente des zones (37) pour augmenter la résistance mécanique de l'âme (3),
- qui présentent une densité de cellules plus importante en termes de volume que les zones (38) situées à proximité,
- dans lesquelles les cellules (35) présentent des parois cellulaires (36) en un matériau qui présente une plus grande résistance mécanique que les parois cellulaires (36) des cellules (35) dans des zones (38) situées à proximité, ou
- dans lesquelles les parois cellulaires (36) des cellules (35) présentent une épaisseur de paroi supérieure à celle des parois cellulaires (36) des cellules (35) dans des zones (38) situées à proximité.

14. Composant sandwich (1) selon l'une des revendications 10 à 13, dans lequel la structure cellulaire (30) présente une zone de bord périphérique (39) qui s'étend à partir d'un bord périphérique (33) de la structure cellulaire (30), la zone de bord périphérique (39) présentant une densité cellulaire liée au volume supérieure à celle d'une zone intérieure (32) de la structure cellulaire (30) adjacente à la zone de bord périphérique (39), ou dans lequel les cellules (35) de la zone de bord périphérique (39) sont remplies d'un matériau de remplissage.

15. Composant sandwich (1) selon la revendication 14, dans lequel une section de connexion (39A ; 39B), en particulier sous la forme d'une broche (39A) ou d'un évidement (39B), est réalisée dans la zone de bord périphérique (39) pour la fixation de l'âme (3) par complémentarité de forme.
